Europäisches Patentamt

European Patent Office

Office européen des brevets

(19)

(11) Numéro de publication : **0 475 816 A1**

## (12) DEMANDE DE BREVET EUROPEEN

(21) Numéro de dépôt : **91402351.0**

(22) Date de dépôt : **03.09.91**

(51) Int. Cl.⁵ : **F16L 25/00, F16L 35/00, F16L 37/08**

(30) Priorité : **05.09.90 FR 9011022**

(43) Date de publication de la demande :
**18.03.92 Bulletin 92/12**

(84) Etats contractants désignés :
**CH DE GB IT LI**

(71) Demandeur : **COMMISSARIAT A L'ENERGIE ATOMIQUE**
**31-33, rue de la Fédération**
**F-75015 Paris (FR)**

(72) Inventeur : **Arnault, Christian**
**25 rue Francis Poulenc**
**F-37250 Montbazon (FR)**
Inventeur : **Freslon, Alain**
**10 rue de la Taille Maimbrée**
**F-37250 Veigne (FR)**

(74) Mandataire : **Mongrédien, André et al**
**c/o BREVATOME 25, rue de Ponthieu**
**F-75008 Paris (FR)**

(54) **Raccord hydraulique et électique entre deux canalisations.**

(57)    Raccord rapide entre deux canalisations (10, 16) adapté de manière que le courant électrique puisse passer au travers. Pour cela, les pièces principales sont conductrices de l'électricité et un écrou (17) est monté sur l'about (2) de manière qu'il puisse être pressé contre le corps 1 par l'intermédiaire d'une paire de surfaces planes (14, 19).
    Application à l'alimentation en fluide et en courant électrique des torches à plasma.

EP 0 475 816 A1

L'invention se rapporte à un raccordement hydraulique et électrique entre deux canalisations.

Certaines torches à plasma sont alimentées en eau de refroidissement par des canalisations doublées à l'intérieur par une tresse métallique qui les alimente en courant électrique de forte intensité et de basse tension. Le raccordement à la torche se fait par un dispositif à vis et écrou où la tresse métallique est sertie ou soudée sur une de ces pièces. Ce dispositif est satisfaisant dans les circonstances normales mais on peut éprouver le besoin de déconnecter rapidement la canalisation en cas d'incident ou pour les besoins de l'entretien. Le dévissage de l'écrou prend cependant du temps et, en l'absence de clapet, l'épanchement de l'eau dans l'environnement ne peut être évité.

C'est pourquoi on a souhaité utiliser des raccords dits rapides couramment employés pour le raccordement de canalisations de fluide et qui se composent essentiellement d'un corps fixé à une extrémité d'une des canalisations, d'un about fixé à une extrémité de l'autre canalisation, de moyens de verrouillage qui réalisent un encliquetage démontable de l'about à l'intérieur du corps et éventuellement de soupapes qui interrompent l'écoulement de fluide à travers l'about et le corps quand ces deux pièces sont déconnectées. Il n'est toutefois pas possible d'utiliser tels quels de tels raccords pour y faire passer du courant électrique car les surfaces qui se touchent à l'encliquetage sont trop peu étendues.

L'invention exprimée sommairement consiste donc en une adaptation de ces raccords rapides pour leur permettre de transmettre du courant électrique le long des canalisations.

Pour cela, le corps comporte une face plane d'extrémité opposée à la canalisation sur laquelle il est situé, tandis que l'about est équipé d'une bague qui l'entoure et qui comporte une face plane opposée à la canalisation sur laquelle il est situé. La bague est reliée à l'about par une liaison permettant de déplacer la bague sur l'about pour presser les deux faces planes l'une contre l'autre quand l'about est encliqueté dans le corps. La bague, le corps et l'about sont conducteurs électriques.

Le moyen préféré pour la liaison est un filetage de l'about et de la bague. Par ailleurs, des gaines d'isolation électrique peuvent si nécessaire entourer la bague, l'about et le corps.

Une telle solution est bien moins encombrante et plus maniable que si on disposait des conducteurs électriques parallèles à l'about et au corps.

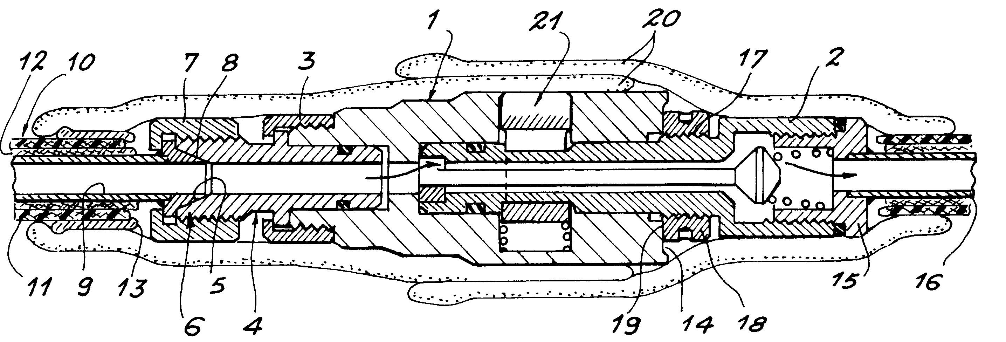

On va maintenant décrire l'invention plus en détail à l'aide de la figure unique annexée à titre illustratif et non limitatif.

Le corps porte la référence 1 et l'about la référence 2. Le corps 1 est une pièce tubulaire qui reçoit à son extrémité opposée à l'about 2 (lors de la connexion) un écrou 3 de raccordement à une canalisation. Le raccordement est indirect et on visse en fait une tige creuse 4 comportant un alésage axial terminé par une empreinte conique 5 sur le corps 1. Un embout 6 entouré par un écrou 7 monté tournant sur lui comporte une extrémité conique 8 qu'on fait pénétrer dans l'empreinte conique 5 et qu'on maintient en place en vissant l'écrou 7 sur un filetage de la tige creuse 4. L'embout 6 comporte également une partie cylindrique 9 autour de laquelle on sertit une canalisation 10 souple, constituée d'une gaine extérieure 11 en plastique et d'une doublure intérieure 12 en tresse métallique conductrice de l'électricité, grâce à un collier de serrage 13.

Le corps 1 est une pièce du commerce qui a été adaptée pour la présente utilisation en y aménageant une face plane 14, perpendiculaire à l'axe du corps 1 et dirigée à l'opposé de la canalisation 10.

L'about 2 est terminé à son extrémité opposée au corps 1 par une bague fixe 15 sur laquelle on a soudé une seconde canalisation 16, dans ce cas un conduit rigide en métal conducteur électrique qui mène à une torche à plasma non représentée. Il serait évidemment possible d'y adapter d'autres genres de canalisations comme des canalisations analogues à la canalisation 10. La tresse métallique serait alors soudée à la bague fixe 15 et la gaine en matière plastique sertie autour de cette bague.

On ne représente pas en détail les moyens de verrouillage 21 de l'about 2 dans le corps 1 et les soupapes qui permettent de maintenir l'étanchéité quand ces deux pièces sont connectées. Ces moyens connus ne sont pas modifiés dans l'invention. L'about 2 est cependant modifié en lui adaptant, sur une portion à l'extérieur du corps 1, un filetage 17 qui permet d'y engager une bague mobile ou un écrou 18. L'écrou 18 comprend une face plane 19 extrême. Quand l'encliquetage de l'about 2 dans le corps 1 a été réalisé, le vissage de l'écrou 18 vers le corps 1 permet d'établir un bon contact entre les faces planes 14 et 19 pour peu qu'elles aient une faible rugosité en étant par exemple polies.

Le courant électrique passe donc de la tresse métallique 12 à la canalisation 16 en passant par l'embout 6, la tige filetée 4, l'écrou 3, le corps 1, l'écrou 18, le filetage 17, l'about 2 et la bague fixe 15. Toutes ces pièces doivent être bien entendu en matériau conducteur électrique. Le passage de l'électricité à travers les filetages ne cause pas de problèmes particuliers.

Il est possible, si cela est nécessaire, de protéger le corps 1, l'écrou 18, l'extérieur de l'about 2 et la canalisation 16, par exemple, par des gaines d'isolation électrique 20 mises en place au fonctionnement.

**Revendications**

1. Raccord de deux canalisations (10, 16) de fluide comprenant un corps (1) à une extrémité d'une des canalisations (10), un about (2) à une extrémité de l'autre canalisation (16), un dispositif de verrouillage (21) pour encliqueter l'about (2) dans un évidement du corps (1), caractérisé en ce que le corps (1) comporte une face plane (14) d'extrémité opposée à la canalisation (10) sur laquelle le corps est situé, l'about (2) est équipé d'une bague (18) qui l'entoure et comporte une face plane (19) opposée à la canalisation (16) sur laquelle l'about (2) est situé, la bague (18) est reliée à l'about (2) par une liaison (17) permettant de déplacer la bague (18) sur l'about (2) pour presser les deux faces planes (14, 19) l'une contre l'autre quand l'about (2) est encliqueté dans le corps (1), et la bague (18), le corps (1) et l'about (2) sont conducteurs électriques.

2. Raccord selon la revendication 1, caractérisé en ce que la liaison (17) est un filetage de l'about (2) et de la bague (18).

3. Raccord selon l'une quelconque des revendications 1 ou 2, caractérisé en ce que des gaines d'isolation électrique (20) entourent la bague (18), l'about (2) et le corps (1).

Office européen
des brevets

**RAPPORT DE RECHERCHE EUROPEENNE**

Numero de la demande

EP    91 40 2351

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-2 575 685 (R.L. SHUGART ET AL.)<br>* colonne 3, ligne 9 – colonne 3, ligne 37; figures *<br>--- | 1,2 | F16L 25/00<br>F16L 35/00<br>F16L 37/08 |
| Y | EP-A-0 077 743 (S. A. DES ETABLISSEMENTS STAUBLI)<br>* page 3, ligne 31 – page 4, ligne 10; figures *<br>--- | 1,2 | |
| A | DE-B-1 110 963 (L. OSTHOFF)<br>* figures *<br>--- | 1,2 | |
| A | AT-B-385 166 (INSTITUT ELEKTROVARKIMENI E.O. PATONA AKADEMII NAUK UKRAINSKOI SSR)<br>* revendications; figures *<br>--- | 1,3 | |
| A | DE-A-3 018 077 (PEST MEGYEI MüANYAGIPARI VALLALAT)<br>* figures *<br>----- | 1,2 | |

**DOMAINES TECHNIQUES RECHERCHES (Int. Cl.5)**

F16L
F16B
H05H

Le présent rapport a été établi pour toutes les revendications

| Lieu de la recherche | Date d'achèvement de la recherche | Examinateur |
|---|---|---|
| LA HAYE | 21 NOVEMBRE 1991 | NEUMANN E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)